(19) Europäisches Patentamt
European Patent Office
Office européen des brevets

(11) EP 3 726 495 A1

(12) **EUROPEAN PATENT APPLICATION**
published in accordance with Art. 153(4) EPC

(43) Date of publication:
**21.10.2020 Bulletin 2020/43**

(51) Int Cl.:
***G08G 1/09*** *(2006.01)*

(21) Application number: **17934529.3**

(86) International application number:
**PCT/JP2017/045114**

(22) Date of filing: **15.12.2017**

(87) International publication number:
**WO 2019/116537 (20.06.2019 Gazette 2019/25)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD TN**

(71) Applicant: **FUJITSU LIMITED**
**Kanagawa 211-8588 (JP)**

(72) Inventor: **ANAN, Taizo**
**Kawasaki-shi, Kanagawa 211-8588 (JP)**

(74) Representative: **Haseltine Lake Kempner LLP**
**138 Cheapside**
**London EC2V 6BJ (GB)**

(54) **INFORMATION ACQUISITION METHOD, INFORMATION ACQUISITION DEVICE, IN-VEHICLE DEVICE, ON-ROAD SENSOR DEVICE, AND INFORMATION ACQUISITION SYSTEM**

(57) In a case where a failure has occurred in a vehicle, information that facilitates an analysis of the failure is acquired.

In a case of receiving failure occurrence information transmitted from an in-vehicle device 12a or an on-road sensor device 12b, a server 14 transmits a request signal requesting transmission of related information to a device different from the in-vehicle device 12a or the on-road sensor device 12b that has transmitted the failure occurrence information. Then, the server 14 acquires each piece of the related information transmitted from the in-vehicle device 12a or the on-road sensor device 12b that has received the request signal.

FIG. 1

**Description**

TECHNICAL FIELD

The disclosed technology relates to an information acquisition method, an information acquisition device, an in-vehicle device, an on-road sensor device, and an information acquisition system.

BACKGROUND ART

Abnormality diagnosis devices that diagnose abnormality of environment recognition sensors mounted on vehicles are known. In this abnormality diagnosis device, user's own vehicle environment information regarding a surrounding environment of a user's own vehicle is acquired by an environment recognition sensor and an engine control unit (ECU), and reference information similar to the user's own vehicle environment information is called from another vehicle and infrastructure and obtained by a communication device. Then, the ECU compares the reference information with the user's own vehicle environment information, and diagnoses that the environment recognition sensor is normal in a case where the difference falls within a threshold, whereas diagnoses that an abnormality has occurred in the environment recognition sensor in a case where the difference is equal to or larger than the threshold.

Furthermore, there is known a monitoring system that compares integrated record data of monitored devices in storage units of the user's own vehicle and the another vehicle and detects an abnormality of the integrated record data in the storage unit of the user's own vehicle.

Furthermore, a driving support system is known. Each in-vehicle device of the driving support system broadcasts vehicle information of the user's own vehicle and transmits wide area vehicle data obtained by adding vehicle identification number of the user's own vehicle to the vehicle information to a center. When receiving the wide area vehicle data, the center stores the wide area vehicle data in association with the vehicle information included in the data in a center-side database (DB). Furthermore, the in-vehicle device transmits an appearance information request signal including a generation time and position information included in the vehicle information received from the another vehicle to the center. The center identifies a vehicle identification number of the vehicle whose appearance information is requested from the in-vehicle device on the basis of the generation time and the position information included in the appearance information request signal, acquires appearance information corresponding to the identified vehicle identification number from an appearance information DB, and returns the appearance information to the in-vehicle device.

CITATION LIST

PATENT DOCUMENT

Patent Document 1: Japanese Laid-open Patent Publication No. 2010-126130
Patent Document 2: Japanese Laid-open Patent Publication No. 2002-37075
Patent Document 3: International Publication Pamphlet No. WO 2016/166940

SUMMARY OF INVENTION

TECHNICAL PROBLEM

In recent years, development of self-driving vehicles has been in progress. In a case where self-driving vehicles become widespread and self-driving vehicles travel on general roads, there is a problem that when a failure occurs in a vehicle, identification of an occurrence cause of the failure is difficult.

In one aspect, the disclosed technology aims to acquire, in a case where a failure has occurred in a vehicle, information that facilitates an analysis of the failure.

SOLUTION TO PROBLEM

In one embodiment, in a case where failure occurrence information is received, a request signal requesting transmission of related information related to a failure of a specific vehicle is transmitted to a sensor information acquisition device different from a sensor information acquisition device that has transmitted the failure occurrence information. The failure occurrence information is information transmitted from the sensor information acquisition device that acquires sensor information regarding a vehicle and is information indicating occurrence of the failure in the specific vehicle.

Then, each piece of the related information transmitted from the sensor information acquisition device that has received the request signal is acquired.

ADVANTAGEOUS EFFECTS OF INVENTION

As one aspect, there is an effect of acquiring, in a case where a failure has occurred in a vehicle, information that facilitates an analysis of the failure.

BRIEF DESCRIPTION OF DRAWINGS

FIG. 1 is a schematic block diagram of an information acquisition system according to an embodiment.
FIG. 2 is a diagram illustrating a specific example of an in-vehicle device and an on-road sensor device according to the embodiment.
FIG. 3 is a schematic block diagram of the in-vehicle device according to the embodiment.
FIG. 4 is a diagram illustrating an example of information stored in a sensor information storage unit of the in-vehicle device according to the embodiment.
FIG. 5 is a schematic block diagram of the on-road sensor device according to the embodiment.
FIG. 6 is a diagram illustrating an example of information stored in a sensor information storage unit of the on-road sensor device according to the embodiment.
FIG. 7 is a schematic block diagram of a server according to the embodiment.
FIG. 8 is a diagram illustrating an example of information stored in an information storage unit of the server according to the embodiment.
FIG. 9 is a block diagram illustrating a schematic configuration of a computer that functions as the in-vehicle device and the on-road sensor device according to the embodiment.
FIG. 10 is a block diagram illustrating a schematic configuration of a computer that functions as the server according to the embodiment.
FIG. 11 is a flowchart illustrating an example of a failure detection processing routine according to the present embodiment.
FIG. 12 is a flowchart illustrating an example of a setting processing routine according to the present embodiment.
FIG. 13 is a flowchart illustrating an example of a related information transmission processing routine according to the present embodiment.
FIG. 14 is a flowchart illustrating an example of collection processing routine according to the present embodiment.
FIG. 15 is a sequence diagram illustrating exchange of information in an information acquisition system according to the present embodiment.

DESCRIPTION OF EMBODIMENTS

In recent years, development of self-driving vehicles has been in progress. Various sensors are mounted on a self-driving vehicle. For example, traveling of the vehicle is controlled according to sensor information obtained by each sensor mounted on the vehicle.
In a case where a failure has occurred in the self-driving vehicle, an analysis for identifying a cause of the failure can be performed on the basis of the sensor information obtained by the various sensors mounted on the vehicle.
For example, when a traveling test is performed in the development of a self-driving vehicle, sensor information is sequentially acquired by various sensors mounted on the vehicle. Then, in the case where a failure has occurred in the vehicle, an analysis for identifying a cause of the failure is performed on the basis of the sensor information of when the failure has occurred. In this case, since the traveling test is performed in a predetermined environment, identification of the cause of the failure is relatively easy.
However, in a case where the self-driving vehicles become widespread, the self-driving vehicles travel in various environments, and general occupants get on the self-driving vehicles. In this case, when a failure has occurred in a specific vehicle, it is difficult to identify an occurrence cause of the failure only from sensor information obtained by sensors mounted on the specific vehicle.
In the case where a failure has occurred in a vehicle, various causes of the failure are conceivable. For example, there is not only a case where a failure of a vehicle occurs due to only malfunction of a sensor mounted on the vehicle or the like but also a case where a failure occurs in a vehicle due to a failure of image processing by an in-vehicle device.
In a case where the occurrence cause of the failure of the vehicle is the failure of image processing by an in-vehicle device, various causes are conceivable such as direct sunlight entering a camera, raindrops blocking the camera, or a failure in an algorithm of the image processing. Furthermore, there may be a possibility of a failure caused by a specific vehicle type or a specific sensor type.

Therefore, in the present embodiment, to analyze the cause of occurrence of a failure in a vehicle from various viewpoints, related information that is information related to the failure of the vehicle is collected. Specifically, in the present embodiment, in a case where a failure has occurred in a specific vehicle, transmission of the related information is requested to an in-vehicle device mounted on a vehicle or an on-road sensor device installed on a road. For example, when the failure has occurred in the specific vehicle, transmission of the related information is requested to the in-vehicle device mounted on a vehicle around the specific vehicle in which the failure has occurred and to the on-road sensor device.

Then, in the present embodiment, each piece of related information transmitted from the device that has been requested to transmit the related information is acquired. Thereby, the information for analyzing the cause of occurrence of a failure in a vehicle from various viewpoints can be collected.

Hereinafter, an example of an embodiment of the disclosed technology will be described in detail with reference to the drawings.

[Information Acquisition System]

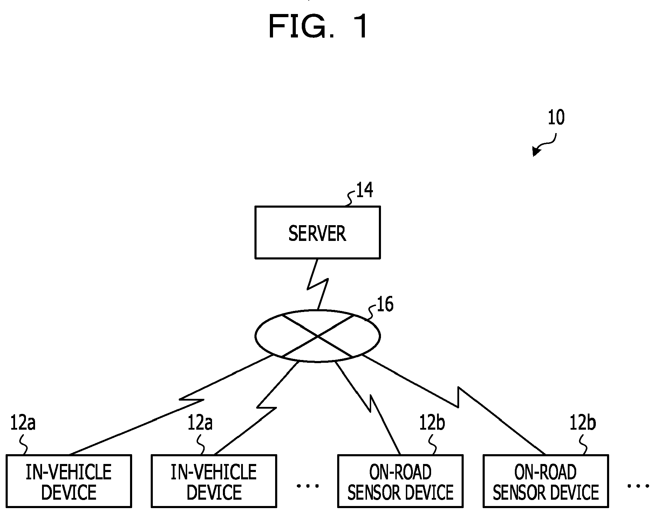

An information acquisition system 10 illustrated in FIG. 1 includes a plurality of in-vehicle devices 12a, a plurality of on-road sensor devices 12b, and a server 14. Note that the server 14 is an example of an information acquisition device according to the disclosed technology. Furthermore, the in-vehicle device 12a and the on-road sensor device 12b are examples of sensor information acquisition devices according to the disclosed technology.

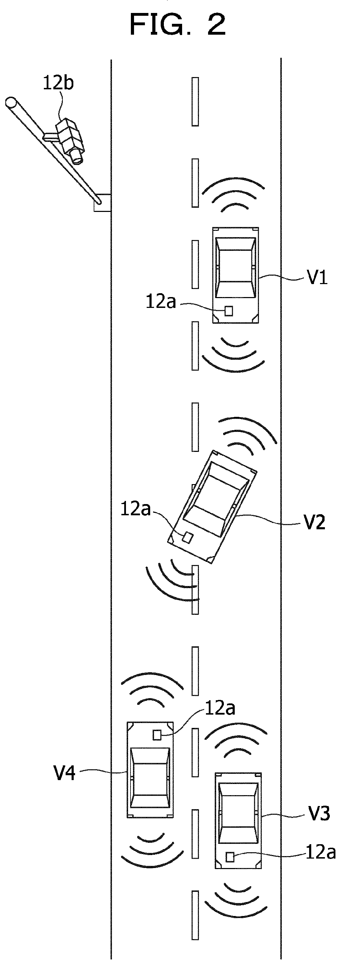

FIG. 2 illustrates a specific example of the in-vehicle device 12a and the on-road sensor device 12b. The in-vehicle device 12a acquires sensor information sequentially acquired by sensors mounted on a vehicle. Furthermore, the on-road sensor device 12b acquires sensor information sequentially acquired by sensors installed on a road. In the example illustrated in FIG. 2, the on-road sensor device 12b sequentially acquires road surface images captured by cameras as the sensor information.

[In-vehicle Device]

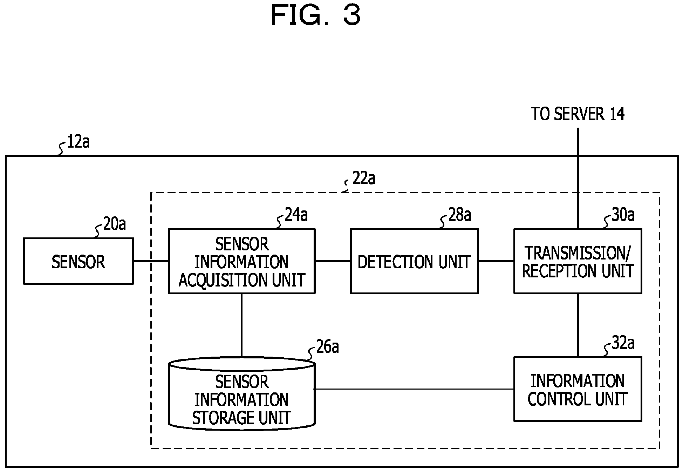

As illustrated in FIG. 3, the in-vehicle device 12a includes a sensor 20a and an information collection device 22a.

The sensors 20a are various sensors provided in the vehicle. Examples of the sensor 20a of the in-vehicle device 12a include a sensor that acquires sensor information regarding a state of the vehicle and a sensor that acquires sensor information regarding an external environment of the vehicle.

Examples of the sensor that acquires sensor information regarding a state of the vehicle include a handle sensor that detects a driver's steering operation, a brake sensor that detects a driver's braking operation, an accelerator sensor that detects a driver's accelerator operation, and the like. Furthermore, the sensor that acquires sensor information regarding a state of the vehicle may be a device that acquires controller area network (CAN) data.

Furthermore, examples of the sensor that acquires sensor information regarding an external environment of the vehicle include an image sensor that captures a peripheral image of the vehicle, a millimeter wave radar that collects three-dimensional point cloud data around the vehicle, and a laser radar sensor that collects the three-dimensional point cloud data around the vehicle.

The information collection device 22a includes a sensor information acquisition unit 24a, a sensor information storage unit 26a, a detection unit 28a, a transmission/reception unit 30a, and an information control unit 32a. The transmission/reception unit 30a is an example of an output unit according to the disclosed technology.

The sensor information acquisition unit 24a sequentially acquires sensor information that is information acquired by the sensor 20a. Then, the sensor information acquisition unit 24a sequentially stores the sensor information in the sensor information storage unit 26a.

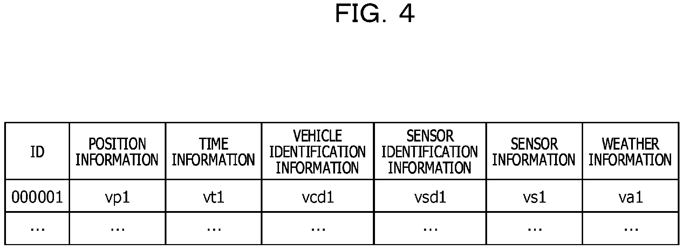

The sensor information storage unit 26a stores the sensor information of each time acquired by the sensor information acquisition unit 24a. The sensor information is stored in association with, for example, an ID representing identification information of the sensor information, position information of when the sensor information has been acquired, and time information of when the sensor information has been acquired, as illustrated in FIG. 4. Furthermore, the sensor information is stored in association with vehicle identification information indicating identification information of the vehicle from which the sensor information has been acquired, sensor identification information indicating identification information of the sensor 20a from which the sensor information has been acquired, and weather information of when the sensor information has been acquired.

For example, the sensor information "vs1" with the ID = 000001 illustrated in FIG. 4 is stored in association with the position information "vp1", the time information "vt1", the vehicle identification information "vcd1", the sensor identification information "vsd1", and the weather information "va1".

The sensor information acquisition unit 24a stores the sensor information that is information acquired by the sensor 20a in the sensor information storage unit 26a in association with the position information, the time information, the vehicle identification information, the sensor identification information, and the weather information.

Note that the vehicle identification information may include a vehicle type, a vehicle color, and the like. Furthermore, the sensor identification information may include a model number and an individual number of the sensor. Furthermore, the weather information includes, for example, temperature, humidity, and precipitation. The weather information may be acquired by a weather sensor installed on the vehicle or may be acquired from an outside using a predetermined communication means.

The detection unit 28a detects whether or not a failure has occurred in the vehicle on the basis of the sensor information of each time acquired by the sensor information acquisition unit 24a. For example, in a case where the vehicle is in an automatic driving mode and the driver's steering operation has been acquired by the sensor information acquisition unit 24a, the detection unit 28a detects that a failure has occurred in the vehicle.

In the case of detecting that a failure has occurred in the vehicle, the detection unit 28a generates failure occurrence information indicating occurrence of the failure. Specifically, the detection unit 28a reads the sensor information, the position information, the time information, and the vehicle identification information of when the occurrence of the failure has been detected from the sensor information storage unit 26a. Furthermore, the detection unit 28a generates the failure occurrence information including the sensor information, the position information, the time information, the vehicle identification information, and information indicating the occurrence of the failure. Then, the detection unit 28a outputs the failure occurrence information to the transmission/reception unit 30a.

The transmission/reception unit 30a transmits/receives information to/from the server 14. Specifically, in the case where the failure occurrence information is output by the detection unit 28a, the transmission/reception unit 30a transmits the failure occurrence information to the server 14. Furthermore, the transmission/reception unit 30a receives a request signal transmitted from the server 14 to be described below.

In a case of receiving the request signal from the server 14 to be described below, the information control unit 32a reads out related information regarding the failure of the specific vehicle from the sensor information storage unit 26a according to information included in the request signal. Then, the information control unit 32a outputs the read related information to the transmission/reception unit 30a. The transmission/reception unit 30a transmits the related information read by the information control unit 32a to the server 14.

[On-road Sensor Device]

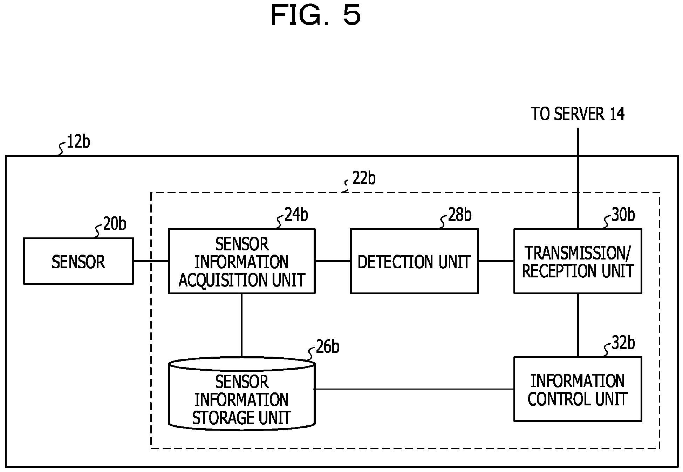

As illustrated in FIG. 5, the on-road sensor device 12b includes a sensor 20b and an information collection device 22b.

The sensor 20b is, for example, a camera that captures an image of a road. In the present embodiment, a case where the sensor 20b is a camera will be described as an example.

The information collection device 22b includes a sensor information acquisition unit 24b, a sensor information storage unit 26b, a detection unit 28b, a transmission/reception unit 30b, and an information control unit 32b. The transmission/reception unit 30b is an example of the output unit according to the disclosed technology.

The sensor information acquisition unit 24b sequentially acquires images as sensor information acquired by the sensor 20b. Then, the sensor information acquisition unit 24b sequentially stores the acquired images as sensor information in the sensor information storage unit 26b.

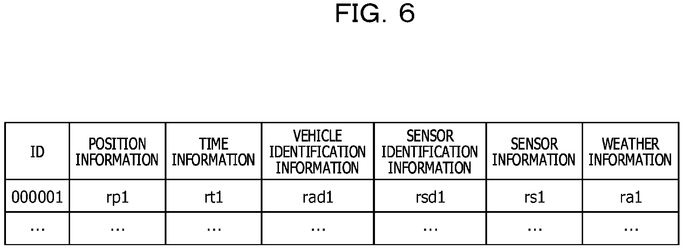

The sensor information storage unit 26b stores the sensor information of each time acquired by the sensor information acquisition unit 24b. The sensor information is stored in association with, for example, an ID representing identification information of the sensor information, position information of when the sensor information has been acquired, and time information of when the sensor information has been acquired, as illustrated in FIG. 6. Furthermore, the sensor information is stored in association with vehicle identification information indicating identification information of the vehicle, sensor identification information indicating identification information of the sensor 20b from which the sensor information has been acquired, and weather information of when the sensor information has been acquired. Note that the vehicle identification information is acquired by communication between the in-vehicle device 12a and the on-road sensor device 12b, for example. Alternatively, the vehicle identification information is acquired from the images acquired by the on-road sensor device 12b, for example.

For example, the sensor information "rs1" with the ID = 000001 illustrated in FIG. 6 is stored in association with the position information "rp1", the time information "rt1", the vehicle identification information "rad1", the sensor identification information "rsd1", and the weather information "ra1".

The detection unit 28b detects whether or not a failure has occurred in a specific vehicle on the basis of the sensor information of each time acquired by the sensor information acquisition unit 24b, similarly to the detection unit 28a of the in-vehicle device 12a. For example, in a case of detecting that the specific vehicle has suddenly stopped on the basis of an image of a road acquired by the sensor information acquisition unit 24b, the detection unit 28b detects that a failure has occurred in the vehicle.

Then, in a case of detecting that the failure has occurred in the vehicle, the detection unit 28b generates failure occurrence information indicating occurrence of the failure and outputs the failure occurrence information to the transmission/reception unit 30b, similarly to the detection unit 28a of the in-vehicle device 12a.

The transmission/reception unit 30b transmits/receives information to/from the server 14. Specifically, in the case where the failure occurrence information is output by the detection unit 28b, the transmission/reception unit 30b transmits the failure occurrence information to the server 14. Furthermore, the transmission/reception unit 30b receives a request signal transmitted from the server 14 to be described below.

In a case of receiving the request signal from the server 14 to be described below, the information control unit 32b reads related information regarding the failure of the specific vehicle from the sensor information storage unit 26b according to information included in the request signal. Then, the information control unit 32b outputs the read related information to the transmission/reception unit 30b. The transmission/reception unit 30b transmits the sensor information read by the information control unit 32b to the server 14.

[Server]

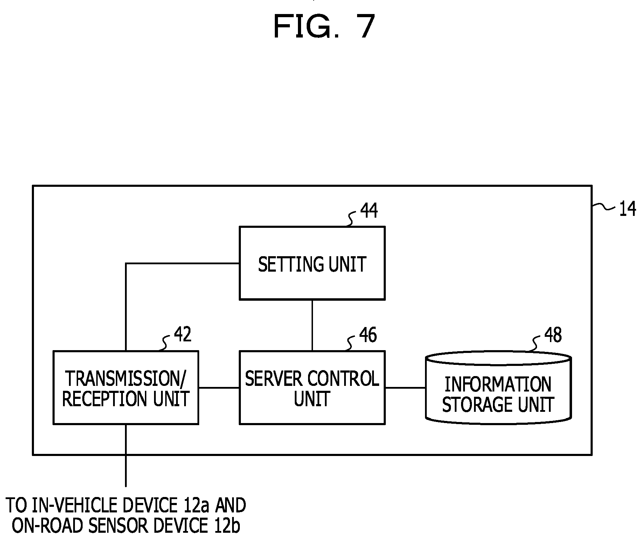

In a case of receiving the failure occurrence information, the server 14 sets the in-vehicle device 12a or the on-road sensor device 12b to be requested to transmit the related information according to the failure occurrence information. Then, the server 14 transmits the request signal requesting transmission of the related information to each of the set in-vehicle device 12a and on-road sensor device 12b. As illustrated in FIG. 7, the server 14 includes a transmission/reception unit 42, a setting unit 44, a server control unit 46, and an information storage unit 48. The transmission/reception unit 42 is an example of a transmission unit and a reception unit according to the disclosed technology.

The transmission/reception unit 42 transmits/receives information to/from the in-vehicle device 12a and the on-road sensor device 12b. Specifically, the transmission/reception unit 42 receives the failure occurrence information transmitted from the in-vehicle device 12a or the on-road sensor device 12b. Furthermore, the transmission/reception unit 42 transmits the request signal to each of the in-vehicle device 12a and the on-road sensor device 12b under the control by the server control unit 46 to be described below.

In transmitting the request signal, the setting unit 44 sets the in-vehicle device 12a and the on-road sensor device 12b to which the request signal is to be transmitted according to at least one of the sensor information, the position information, the time information, the vehicle identification information, and the sensor identification information.

Specifically, the setting unit 44 creates a logical expression on the basis of a combination of the following (1) information related to the specific vehicle in which the failure has occurred and (2) information related to the sensor information acquired by the in-vehicle device 12a or the on-road sensor device 12b. Then, the setting unit 44 sets the in-vehicle device 12a or the on-road sensor device 12b to which the request signal is to be transmitted and the related information requested to be transmitted according to the created logical expression.

(1) Information related to the specific vehicle in which the failure has occurred.

Ax: Position information of the specific vehicle.
Bx: Time information of when the sensor information regarding the specific vehicle has been acquired.
Cx: Vehicle identification information of the specific vehicle.
Dx: Sensor identification information of the sensor mounted on the specific vehicle.
Ex: Sensor information regarding the specific vehicle.
Fx: Weather information around the specific vehicle.

(2) Information related to the sensor information acquired by the in-vehicle device 12a or the on-road sensor device 12b.

Ay: Position information of when the sensor information has been acquired.
By: Time information of when the sensor information has been acquired.
Cy: Vehicle identification information of the in-vehicle device 12a from which the sensor information has been acquired.
Dy: Sensor identification information of the sensor 20a (or the sensor 20b) from which the sensor information has been acquired.
Ey: Sensor information.
Fy: Weather information of when the sensor information has been acquired.

Note that each piece of information of Ax to Fx and Ay to Fy may include a plurality of elements. For example, a plurality of pieces of information may be included such as Cx = (ID, vehicle type, color), Ex = (information obtained by a millimeter wave radar, an image captured by a front camera, an image captured by a rear camera), or Fx = (precipitation, wind speed, weather).

An example of a logical expression for setting the in-vehicle device 12a or the on-road sensor device 12b is illustrated. Note that, in the following logical expression, $\wedge$ represents a logical product, and $\vee$ represents a logical sum. Furthermore, the format [•, •] illustrated below, for example [X, Y] represents that a device that satisfies a logical formula X is requested to transmit the related information that satisfies a logical expression Y. A logical expression regarding Ax to Fx, which is information related to the specific vehicle, is set to X. A logical expression regarding Ay to Fy, which is information related to the sensor information acquired by the in-vehicle device 12a or the on-road sensor device 12b, is set to Y.

For example, in a case of requesting a vehicle existing near the position Ax at the time Bx to transmit the sensor information Ey as the related information, the setting unit 44 performs setting to transmit the request signal to the in-vehicle device 12a or the on-road sensor device 12b set according to the logical expression (1) below.

$$[Ax \wedge Bx, \; Ey] \; \ldots \; (1)$$

Furthermore, in a case of requesting the in-vehicle device 12a or the on-road sensor device 12b that satisfies the position Ax, the time Bx, and the vehicle identification information Cx to transmit the sensor identification information Dy and the sensor information Ey as the related information, the setting unit 44 performs setting to transmit the request signal to the in-vehicle device 12a or the on-road sensor device 12b set according to the logical expression (2) below.

$$[Ax \wedge Bx \wedge Cx, \; (Dy, \; Ey)] \; \ldots \; (2)$$

As described above, the setting unit 44 can narrow down the in-vehicle device 12a and the on-road sensor device 12b from which information is to be collected by the setting using the logical expressions. As a result, the related information related to the failure that has occurred in the specific vehicle can be collected from the in-vehicle device 12a and the on-road sensor device 12b.

Note that the setting unit 44 may set the in-vehicle devices 12a and the on-road sensor device 12b so as to include a constraint condition. For example, in a case of collecting the sensor information Ey acquired near the position Ax and within one hour from the time Bx, a constraint condition may be included as illustrated in the following expression (3).

$$[Ax \wedge (Bx \leq t \leq 1), \; Ey] \; \ldots \; (3)$$

The server control unit 46 controls the transmission/reception unit 42 to transmit the request signal to each of the in-vehicle device 12a and the on-road sensor device 12b set by the setting unit 44. The transmission/reception unit 42 transmits the request signal to each of the in-vehicle device 12a and the on-road sensor device 12b under the control of the server control unit 46. Note that the request signal includes information indicating what king of information should be transmitted to the server 14 (for example, the information Y on the right side of the logical expression).

Note that, in transmitting the request signal, the request signal is output to each of the target in-vehicle device 12a and on-road sensor device 12b, using, for example, a cellular phone network. Alternatively, the request signal may be output by broadcast to all of domestic and oversea in-vehicle devices 12a and on-road sensor devices 12b, and only the target in-vehicle device 12a and on-road sensor device 12b may acquire the request signal.

Furthermore, the server control unit 46 acquires each piece of the related information transmitted from the in-vehicle device 12a and the on-road sensor device 12b that have received the request signal. Then, the server control unit 46 stores the acquired related information in the information storage unit 48. The related information includes at least one of the sensor information, the position information, the time information, the vehicle identification information, the sensor identification information, and the weather information according to the set logical expression.

The information storage unit 48 stores each piece of the related information transmitted from the in-vehicle device 12a or the on-road sensor device 12b to which the request signal has been transmitted.

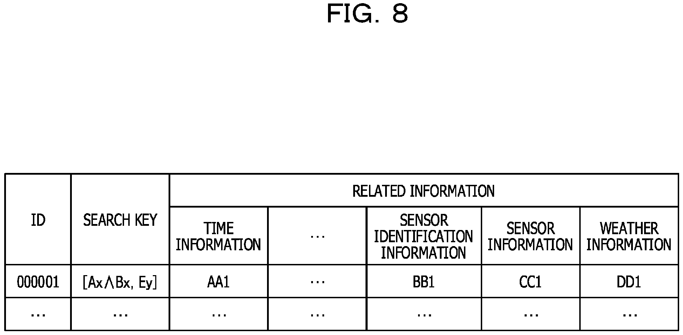

Note that the server control unit 46 sets the logical expression used by the setting unit 44 as a search key, and stores the search key that is the logical expression in association with the related information transmitted from the in-vehicle device 12a or the on-road sensor device 12b in the information storage unit 48, for example, as illustrated in FIG. 8. By setting the logical expression used for generating the request signal as a search key, the specific related information can be easily and quickly searched in analyzing the cause of the failure.

Note that the server control unit 46 may store the related information in the information storage unit 48, using at least one of the sensor information, the position information, the time information, the vehicle identification information, the sensor identification information, and the weather information included in the related information, as a key.

Next, a specific example will be described with reference to FIG. 2 above. A case in which a plurality of vehicles is traveling on a road as illustrated in FIG. 2 above will be described as an example. On the road, four vehicles V1, V2, V3, and V4 and the on-road sensor device 12b provided on the road exist. For example, one vehicle V2 out of four vehicles is assumed to be traveling in the automatic driving mode.

At this time, the vehicle V2 is assumed to stray onto the oncoming lane on the road. In this case, the driver of the vehicle V2 is assumed to operate the steering wheel to correct the direction of the vehicle. Since the driver of the vehicle V2 has operated the steering wheel in a traveling direction under the control of the automatic driving mode, the detection unit 28a of the in-vehicle device 12a mounted on the vehicle V2 detects occurrence of a failure and generates the failure occurrence information.

At this time, the in-vehicle device 12a of the vehicle V2 may store the sensor information before and after the occurrence of the failure (for example, the sensor information of two minutes) in a storage area different from a normal storage area (for example, a protected area that is a protected storage area), for example,.

The detection unit 28a of the in-vehicle device 12a of the vehicle V2 transmits the failure occurrence information including the sensor information acquired by the sensor 20a, the position information, the time information, and the vehicle identification information to the server 14.

When receiving the failure occurrence information transmitted from the in-vehicle device 12a of the vehicle V2, the server 14 sets the logical expression according to some strategies, and collects information for analyzing the failure.

For example, the server 14 sets the logical expression according to the following strategies 1, 2, and 3, and sets the in-vehicle device 12a and the on-road sensor device 12b to which the request signal is to be transmitted and the related information to be transmitted according to the set logical expression. Note that, in the strategies 1, 2, and 3 to be described below, a case where the failure occurrence information does not include the sensor information, and the position information, the time information, and the vehicle identification information are included in the failure occurrence information will be described as an example.

(Strategy 1)

The sensor information (for example, an image captured by a camera, information acquired by a millimeter wave radar, and information acquired by a laser radar) acquired by the in-vehicle device 12a of the vehicle V2 in which the failure has occurred is collected as the information for analyzing the failure.

In this case, the logical expression set by the setting unit 44 of the server 14 is $[Cx, (Dy, Ey)]$. The vehicle identification information of the vehicle V2 in which the failure has occurred is input to $Cx$. In many cases, it is considered that the occurrence cause of the failure of the vehicle V2 is identified by the information collection by the strategy 1. However, there are some cases where the occurrence cause of the failure of the vehicle V2 is not identified only by the information collection by the strategy 1. Therefore, it is conceivable to perform information collection by the strategy 2 to be described below.

(Strategy 2)

The related information is collected from the vehicles V1, V3, and V4 around the vehicle V2 in which the failure has occurred. In this case, the sensor information (for example, images captured by cameras and the like) of not only the vehicle V2 but also of the vehicles V1, V3, and V4 existing around the vehicle V2 are used. The logical expression in this case is, for example, $[Ax \wedge Bx, (Dy, Ey)]$. As a result, there is a possibility that an unexpected factor that has not been caught from only the information acquired by the in-vehicle device 12a of the vehicle V2 in which the failure has occurred may become apparent.

(Strategy 3)

There is a possibility that the occurrence cause of the failure of the vehicle V2 is a failure specific to a sensor mounted on the vehicle V2. Therefore, for example, the sensor information acquired by the in-vehicle device 12a of another vehicle equipped with the same sensor as the sensor mounted on the vehicle V2 is periodically collected for a predetermined period after receiving the failure occurrence information. Alternatively, there is a possibility that the vehicle type representing the vehicle information of the vehicle V2 is related to the occurrence of the failure. Therefore, it is conceivable to sequentially collect information as to whether or not a failure occurs in a vehicle of the same type as the vehicle V2 or a vehicle equipped with the same sensor as the sensor mounted on the vehicle V2. In this case, the logical expression is, for example, [Cx ∨ Dx, (Dy, Ey)].

As described above, the setting unit 44 of the server 14 can set various logical expressions and collect related information for analyzing the cause of the failure of the vehicle.

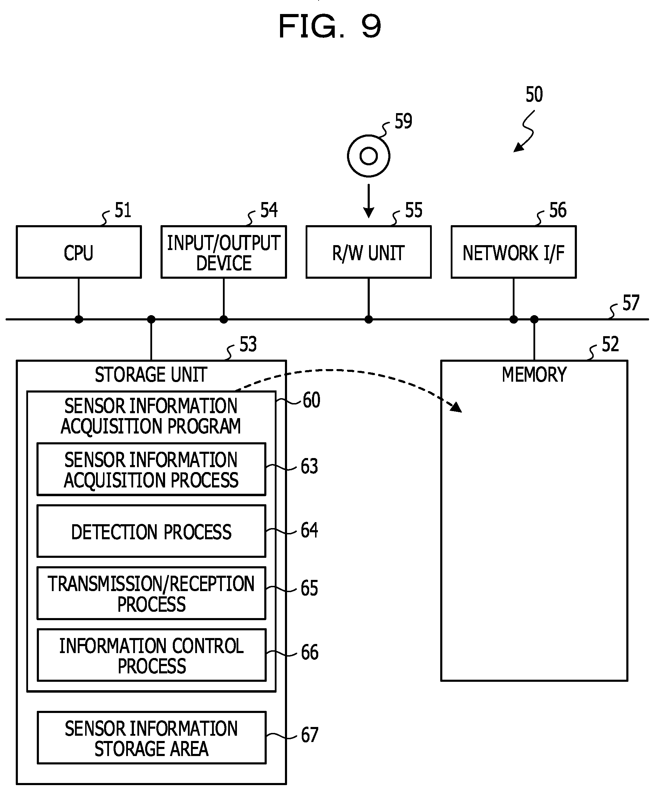

The information collection device 22a of the in-vehicle device 12a can be implemented by, for example, a computer 50 illustrated in FIG. 9. The computer 50 includes a CPU 51, a memory 52 as a temporary storage area, and a nonvolatile storage unit 53. Furthermore, the computer 50 includes an input/output interface (I/F) 54 connected with the sensor 20a, a display device, and an input/output devices (not illustrated) such as an input device, and a read/write (R/W) unit 55 that controls reading and writing of data from and into a recording medium 59. Furthermore, the computer 50 includes a network I/F 56 connected to a network such as the Internet. The CPU 51, the memory 52, the storage unit 53, the input/output I/F 54, the R/W unit 55, and the network I/F 56 are interconnected via a bus 57.

The storage unit 53 can be implemented by a hard disk drive (HDD), a solid state drive (SSD), a flash memory, or the like. The storage unit 53 as a storage medium stores a sensor information acquisition program 60 for causing the computer 50 to function as the information collection device 22a. The sensor information acquisition program 60 includes a sensor information acquisition process 63, a detection process 64, a transmission/reception process 65, and an information control process 66. A sensor information storage area 67 stores information constituting the sensor information storage unit 26a.

The CPU 51 reads out the sensor information acquisition program 60 from the storage unit 53, expands the sensor information acquisition program 60 in the memory 52, and sequentially executes the processes included in the sensor information acquisition program 60. The CPU 51 executes the sensor information acquisition process 63, thereby operating as the sensor information acquisition unit 24a illustrated in FIG. 3. Furthermore, the CPU 51 executes the detection process 64, thereby operating as the detection unit 28a illustrated in FIG. 3. Furthermore, the CPU 51 executes the transmission/reception process 65, thereby operating as the transmission/reception unit 30a illustrated in FIG. 3. Furthermore, the CPU 51 executes the information control process 66, thereby operating as the information control unit 32a illustrated in FIG. 3. Furthermore, the CPU 51 reads out information from the sensor information storage area 67 and expands the sensor information storage unit 26a in the memory 52. Thereby, the computer 50 that has executed the sensor information acquisition program 60 functions as the information collection device 22a of the in-vehicle device 12a. The CPU 51 that executes the sensor information acquisition program 60 as software is hardware.

Note that functions implemented by the sensor information acquisition program 60 can also be implemented by, for example, a semiconductor integrated circuit, more specifically, an application specific integrated circuit (ASIC) or the like.

Note that the information collection device 22b of the on-road sensor device 12b can also be implemented by the computer 50 illustrated in FIG. 9. In this case, the CPU 51 executes the sensor information acquisition process 63, thereby operating as the sensor information acquisition unit 24b illustrated in FIG. 5. Furthermore, the CPU 51 executes the detection process 64, thereby operating as the detection unit 28b illustrated in FIG. 5. Furthermore, the CPU 51 executes the transmission/reception process 65, thereby operating as the transmission/reception unit 30b illustrated in FIG. 5. Furthermore, the CPU 51 executes the information control process 66, thereby operating as the information control unit 32b illustrated in FIG. 5. Furthermore, the CPU 51 reads out information from the sensor information storage area 67 and expands the sensor information storage unit 26b in the memory 52. Thereby, the computer 50 that has executed the sensor information acquisition program 60 functions as the information collection device 22b of the on-road sensor device 12b. The CPU 51 that executes the sensor information acquisition program 60 as software is hardware.

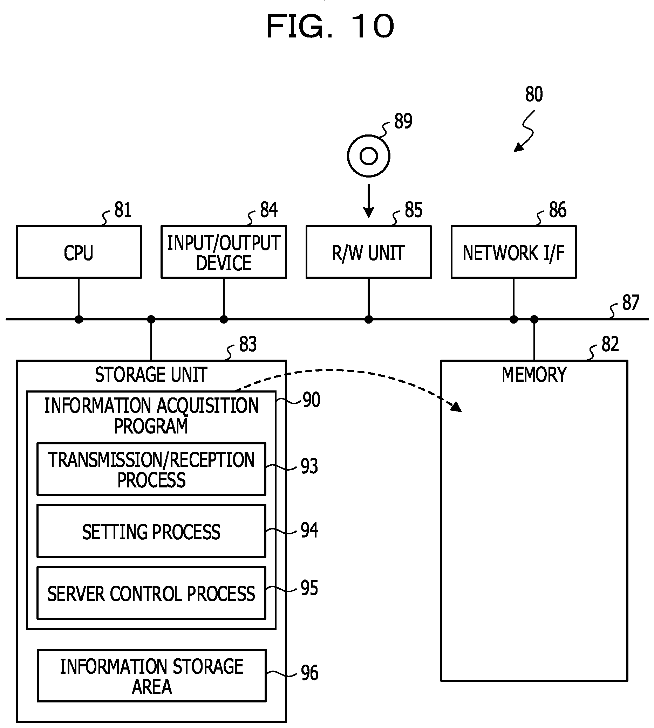

Furthermore, the server 14 can be implemented by, for example, a computer 80 illustrated in FIG. 10. The computer 80 includes a CPU 81, a memory 82 as a temporary storage area, and a nonvolatile storage unit 83. Furthermore, the computer 80 includes an input/output I/F 84 connected with a display device and an input/output device (not illustrated) such as an input device, and an R/W unit 85 that controls reading and writing of data from and into a recording medium 89. Furthermore, the computer 80 includes a network I/F 86 connected to a network such as the Internet. The CPU 81, the memory 82, the storage unit 83, the input/output I/F 84, the R/W unit 85, and the network I/F 86 are interconnected via a bus 87.

The storage unit 83 can be implemented by an HDD, an SSD, a flash memory, or the like. The storage unit 83 as a storage medium stores an information acquisition program 90 for causing the computer 80 to function as the server 14. The information acquisition program 90 includes a transmission/reception process 93, a setting process 94, and a server control process 95. An information storage area 96 stores information constituting the information storage unit 48.

The CPU 81 reads out the information acquisition program 90 from the storage unit 83, expands the information acquisition program 90 in the memory 82, and sequentially executes the processes included in the information acquisition program 90. The CPU 81 executes the transmission/reception process 93, thereby operating as the transmission/reception unit 42 illustrated in FIG. 7. Furthermore, the CPU 81 executes the setting process 94, thereby operating as the setting unit 44 illustrated in FIG. 7. Furthermore, the CPU 81 executes the server control process 95, thereby operating as the server control unit 46 illustrated in FIG. 7. Furthermore, the CPU 81 reads out information from the information storage area 96, and expands the information storage unit 48 in the memory 82. Thereby, the computer 80 that has executed the information acquisition program 90 functions as the server 14. The CPU 81 that executes the information acquisition program 90 as software is hardware.

Note that the function implemented by the information acquisition program 90 can also be implemented by, for example, a semiconductor integrated circuit, more specifically, an ASIC or the like.

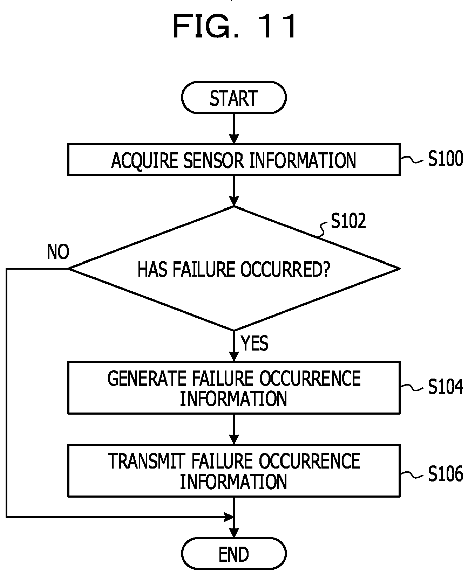

Next, the functions of the information acquisition system 10 according to the present embodiment will be described. When the information acquisition system 10 operates, processing routines illustrated in FIGS. 11 to 13 are executed by each of the in-vehicle device 12a, the on-road sensor device 12b, and the server 14.

The in-vehicle device 12a mounted on the vehicle and the on-road sensor device 12b installed on the road repeatedly execute a failure detection processing routine illustrated in FIG. 11. Note that, in the following processing, the failure detection processing routine executed by the in-vehicle device 12a will be described.

In step S100, the sensor information acquisition unit 24a of the in-vehicle device 12a acquires the sensor information that is information acquired by the sensor 20a. Then, the sensor information acquisition unit 24a sequentially stores the sensor information in the sensor information storage unit 26a.

In step S102, the detection unit 28a detects whether or not a failure has occurred in the vehicle on the basis of the sensor information of each time acquired by the sensor information acquisition unit 24a. For example, in the case where the vehicle is in the automatic driving mode and the sensor information indicating the driver's steering operation has been acquired in above step S100, the detection unit 28a detects that a failure has occurred in the vehicle. In a case where it is determined that a failure has occurred in the vehicle, the routine proceeds to step S104. On the other hand, in a case where it is determined that a failure has not occurred in the vehicle, the failure detection processing routine is terminated.

In step S104, the detection unit 28a generates the failure occurrence information including the sensor information, the position information, the time information, the vehicle identification information, and the information indicating the occurrence of the failure.

In step S106, the transmission/reception unit 30a transmits the failure occurrence information generated in above step S104 to the server 14.

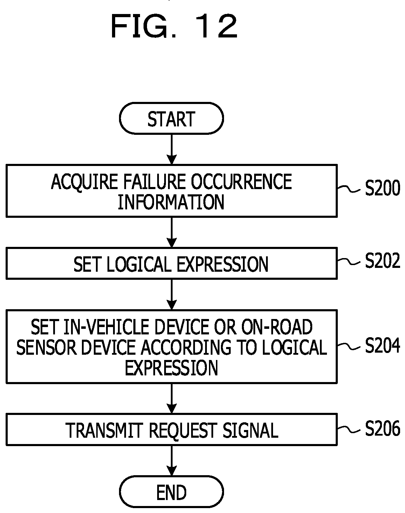

When the failure occurrence information is transmitted from the in-vehicle device 12a or the on-road sensor device 12b to the server 14, the server 14 executes a setting processing routine illustrated in FIG. 12.

In step S200, the transmission/reception unit 42 of the server 14 acquires the failure occurrence information transmitted from the in-vehicle device 12a or the on-road sensor device 12b.

In step S202, the setting unit 44 sets the logical expression according to at least one of the sensor information, the position information, the time information, the vehicle identification information, and the sensor identification information.

In step S204, the setting unit 44 sets the in-vehicle device 12a and the on-road sensor device 12b to which the request signal is to be transmitted on the basis of the logical expression set in above step S202.

In step S206, the server control unit 46 controls the transmission/reception unit 42 to transmit the request signal to each of the in-vehicle device 12a and the on-road sensor device 12b set in above step S204.

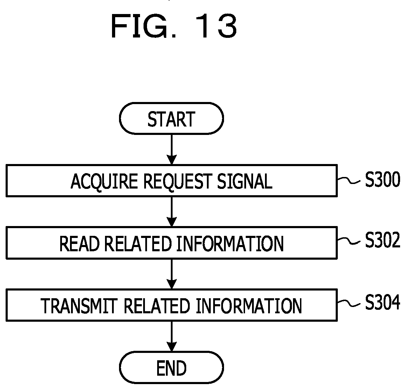

When the request signal is transmitted from the server 14 to the in-vehicle device 12a and the on-road sensor device 12b, the in-vehicle device 12a and the on-road sensor device 12b execute a related information transmission processing routine illustrated in FIG. 13. Note that, in the following processing, the related information transmission processing routine executed by the in-vehicle device 12a will be described.

In step S300, the transmission/reception unit 30a of the in-vehicle device 12a acquires the request signal transmitted from the server 14.

In step S302, the information control unit 32a reads out the related information from the sensor information storage unit 26a according to the information Y included in the request signal received in above step S300 above.

In step S304, the transmission/reception unit 30a transmits the related information read in above step S302 to the server 14.

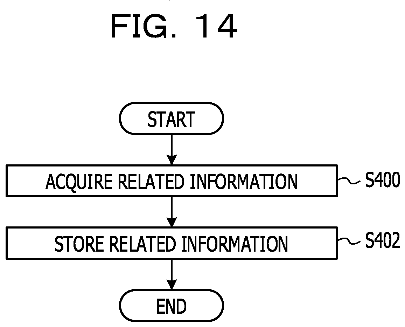

When the related information is transmitted from the in-vehicle device 12a and the on-road sensor device 12b to the server 14, the server 14 executes a collection processing routine illustrated in FIG. 14.

In step S400, the transmission/reception unit 42 acquires each piece of the related information transmitted from the in-vehicle device 12a and the on-road sensor device 12b.

In step S402, the server control unit 46 stores each piece of the related information acquired in above step S400 in the information storage unit 48.

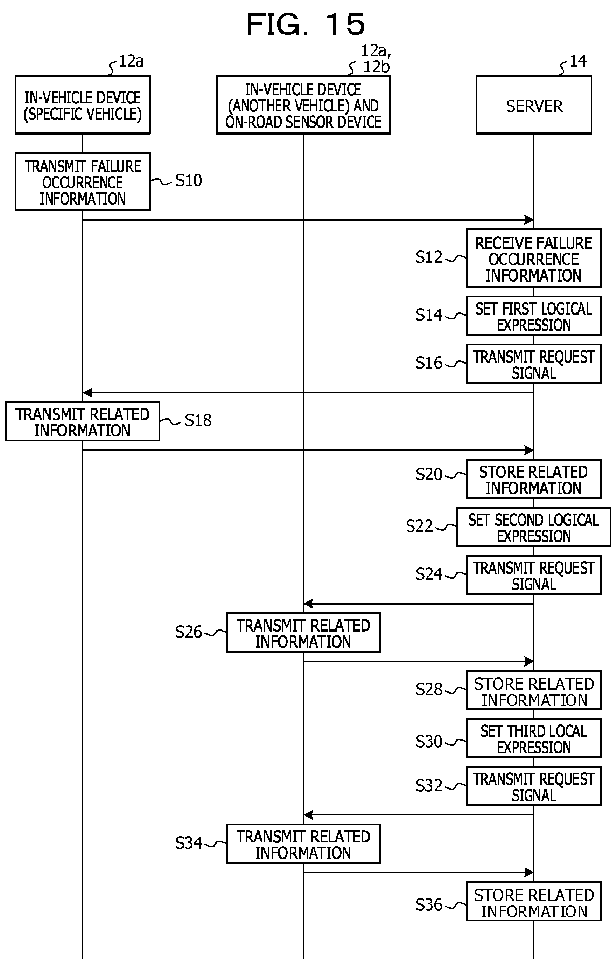

Next, information exchange among the server 14, the in-vehicle device 12a, and the on-road sensor device 12b will be described with reference to FIG. 15. In the sequence diagram illustrated in FIG. 15, a flow of processing of collecting the related information according to a predetermined strategy will be described.

In step S10, when detecting occurrence of a failure, the in-vehicle device 12a of the specific vehicle transmits the failure occurrence information to the server 14.

In step S12, the server 14 receives the failure occurrence information transmitted in above step S10.

In step S14, the server 14 sets, for example, [Cx, (Dy, Ey)]) as a first logical expression. For example, in the first logical expression, the vehicle identification information of the specific vehicle in which the failure has occurred is set as Cx. As a result, first, the related information is collected from the in-vehicle device 12a of the specific vehicle in which the failure has occurred.

In step S16, the server 14 sets the in-vehicle device 12a of the specific vehicle as the in-vehicle device 12a to which the request signal is to be transmitted according to the first logical expression set in above step S14. Then, the server 14 transmits the request signal requesting transmission of the related information to the in-vehicle device 12a of the set specific vehicle.

In step S18, the in-vehicle device 12a of the specific vehicle receives the request signal transmitted from the server 14 in above step S16, and reads out the related information (Dy, Ey) represented by the request signal from the sensor information storage unit 26a. Then, the in-vehicle device 12a of the specific vehicle transmits the read related information to the server 14.

In step S20, the server 14 receives the related information transmitted from the in-vehicle device 12a in above step S18. Then, the server 14 sets the logical expression set in above step S14 as a search key, and stores the related information in the information storage unit 48.

In step S22, the server 14 sets, for example, [Ax ∧ Bx, (Dy, Ey)]) as a second logical expression. For example, in the second logical expression, the in-vehicle device 12a and the on-road sensor device 12b of another vehicle that has existed at the time Bx around the position Ax of the specific vehicle in which the failure has occurred are set as devices to which the request signal is to be transmitted. Thereby, the related information is collected from the in-vehicle device 12a and the on-road sensor device 12b of the another vehicle around the specific vehicle in which the failure has occurred.

In step S24, the server 14 sets the in-vehicle device 12a and the on-road sensor device 12b of the vehicle around the specific vehicle in which the failure has occurred according to the second logical expression set in above step S22. Then, the server 14 transmits the request signal requesting transmission of the related information to each of the set in-vehicle device 12a and on-road sensor device 12b of the another vehicle.

In step S26, the in-vehicle device 12a and the on-road sensor device 12b of the another vehicle that have received the request signal receive the request signal transmitted from the server 14 in above step S24, and read out the related information (Dy, Ey) represented by the request signal. Then, the in-vehicle device 12a and the on-road sensor device 12b of the another vehicle transmit the read related information to the server 14.

In step S28, the server 14 receives the related information transmitted from the in-vehicle device 12a in above step S26. Then, the server 14 sets the logical expression set in above step S22 as a search key, and stores the related information in the information storage unit 48.

In step S30, the server 14 sets a third logical expression. For example, a logical expression different from the first logical expression set in step S14 and the second logical expression set in above step S22 is set as a third logical expression. Thereby, the related information related to the specific vehicle in which the failure has occurred is further collected.

In step S32, the server 14 sets the in-vehicle device 12a and the on-road sensor device 12b of a vehicle according to the third logical expression set in above step S30. Then, the server 14 transmits the request signal requesting transmission of the related information to the set in-vehicle device 12a and on-road sensor device 12b of the vehicle.

In step S34, the in-vehicle device 12a and the on-road sensor device 12b of the another vehicle that have received the request signal receive the request signal transmitted from the server 14 in above step S32, and read out the related information represented by the request signal. Then, the in-vehicle device 12a and the on-road sensor device 12b of the another vehicle transmit the read related information to the server 14.

In step S36, the server 14 receives the related information transmitted from the in-vehicle device 12a in above step S34. Then, the server 14 sets the logical expression set in above step S32 as a search key, and stores the related information in the information storage unit 48. Note that the processing in above steps S32 to S36 is periodically and repeatedly executed.

In a case where there is related information to be collected, the server 14 may generate a plurality of logical expressions and transmit the request signal to the in-vehicle devices 12a and the on-road sensor devices 12b set according to the logical expressions.

As described above, the server of the information acquisition system according to the present embodiment transmits, in a case of receiving the failure occurrence information from a specific vehicle, the request signal requesting transmission of related information related to the failure of the vehicle to each of the in-vehicle device and the on-road sensor device. Furthermore, the server of the information acquisition system acquires each piece of the related information transmitted from the in-vehicle device and the on-road sensor device that have received the request signal. Thereby, in the case where a failure has occurred in a vehicle, information that facilitates an analysis of the failure can be acquired.

Furthermore, the related information related to various causes of the failure that has occurred in the vehicle can be easily collected, whereby the cause of the failure can be specified at an early stage.

Furthermore, in a case where a failure has occurred in a specific vehicle, causes of the occurrence of the failure can be separated as described in (A) to (C) below, for example, by acquiring the related information from the in-vehicle device of another vehicle and the on-road sensor device.

(A) In the case where a failure has occurred only in the specific vehicle, a problem that only the specific vehicle has is identified as the cause of the failure.

(B) In the case where a failure has occurred in the specific vehicle, and when the failure occurs in a plurality of other vehicles at the same place as a place where the failure has occurred, the place is identified as the cause of the failure.

(C) In the case where a failure has occurred in the specific vehicle, and when the failure also occurs in a plurality of other vehicles equipped with the same sensor as the sensor mounted on the specific vehicle, the sensor is identified as the cause of the failure.

Furthermore, by setting the logical expression used for collecting the related information as the search key, and storing the search key in association with the related information, the information for analyzing the cause of the failure that has occurred in the vehicle can be easily and quickly searched.

Note that, in the above description, a mode in which each of the programs are stored (installed) in advance in the storage unit has been described. However, an embodiment is not limited to the mode. The program according to the disclosed technology can also be provided in the form of being recorded on a recording medium such as a CD-ROM, a DVD-ROM, or a USB memory.

All the documents, patent applications, and technical standards described herein should be incorporated by reference in the present specification in a same degree as in a case where each of documents, patent applications, and technical standards is specifically and individually indicated to be incorporated by reference.

Next, modifications of the above embodiment will be described.

The server control unit 46 of the server 14 in the above embodiment may set a vehicle having a high possibility of occurrence of a failure as a vehicle to be monitored. In this case, for example, the server control unit 46 may transmit the request signal to each of the in-vehicle device 12a and the on-road sensor device 12b set according to the logical expression at a higher frequency than a predetermined frequency. For example, the server 14 performs setting to cause a related vehicle related to the vehicle in which the failure has occurred to periodically transmit the sensor information and the like acquired by the in-vehicle device 12a. For example, in a case where a failure has occurred in a vehicle of a vehicle type represented by the position Ax, the time Bx, and the vehicle identification information Cx, the server control unit 46 of the server 14 transmits the request signal corresponding to the logical expression (4) below to the in-vehicle device 12a every time a time T elapses and collects predetermined information.

$$[Cx, \; Dx] \; \ldots \; (4)$$

Note that the logical expression (4) above instructs the vehicle of the vehicle type corresponding to the vehicle identification information Cx to transmit the sensor information Dx to the server 14.

Furthermore, information collection from a vehicle in which a failure has occurred, vehicles around the vehicle in which the failure has occurred, on-road sensors, and the like can be automated. For the automation, logical expressions for the information collection can be stored in advance in a storage unit (not illustrated) of the server 14, and the logical expressions can be sequentially read out from the storage unit (not illustrated). Alternatively, the logical expressions may be automatically generated according to a preset condition.

For example, in a case where the weather information is included in the failure occurrence information transmitted from the in-vehicle device 12a of the specific vehicle, the logical expression may be automatically generated according to the weather information. In this case, whether or not the vehicle is traveling in a typhoon is determined, for example, according to the weather information included in the failure occurrence information when the server 14 acquires the failure occurrence information. In the case where the vehicle is traveling in a typhoon, a possibility that the failure has occurred due to an external environment of the vehicle is high. Therefore, in a case where the vehicle in which the failure has occurred is determined to be traveling in a typhoon, the setting unit 44 of the server 14 sets a logical expression of transmitting the request signal only to the in-vehicle device 12a of the specific vehicle in which the failure has occurred. Then, the server control unit 46 of the server 14 may transmit the request signal requesting transmission of the related information only to the in-vehicle device 12a of the specific vehicle in which the failure has occurred, and acquire only the related information of the specific vehicle.

Furthermore, when the server 14 has acquired the failure occurrence information, the logical expression may be automatically generated according to the sensor information and the sensor identification information included in the failure occurrence information. For example, in a case where the sensor information transmitted from the in-vehicle device 12a indicates a temperature of the vehicle, when the temperature of the vehicle exceeds a tolerance temperature of a temperature sensor, a possibility that the temperature sensor has broken down is high. Therefore, the setting unit 44 of the server 14 sets a logical expression of transmitting the request signal to the in-vehicle device 12a equipped with each sensor having the same sensor identification information as the sensor identification information included in the failure occurrence information and the on-road sensor device 12b. Then, the server control unit 46 of the server 14 transmits the request signal requesting transmission of the related information to the in-vehicle device 12a and the on-road sensor device 12b set according to the logical expression.

Furthermore, in the above-described embodiment, the case in which the detection unit 28a (or the detection unit 28b) detects whether or not a failure has occurred on the basis of the sensor information acquired by the sensor information acquisition unit 24a (or the sensor information acquisition unit 24b) has been described as an example. However, an embodiment is not limited to the example. For example, the detection unit 28a (or the detection unit 28b) may detect whether or not a failure has occurred according to an index measured by a predetermined in-vehicle system.

Furthermore, the in-vehicle device 12a and the on-road sensor device 12b to which the request signal is to be transmitted may be set on the basis of the time information of when a failure has occurred, which is included in the failure occurrence information. For example, if the time of occurrence of the failure is a night time zone, the request signal may be transmitted to the in-vehicle device 12a of a vehicle traveling in the night time zone and the on-road sensor device 12b that acquires the sensor information of the night time zone.

REFERENCE SIGNS LIST

| | |
|---|---|
| 10 | Information acquisition system |
| 12a | In-vehicle device |
| 12b | On-road sensor device |
| 14 | Server |
| 20a, 20b | Sensor |
| 22a, 22b | Information collection device |
| 24a, 24b | Sensor information acquisition unit |
| 26a, 26b | Sensor information storage unit |
| 28a, 28b | Detection unit |
| 30a, 30b | Transmission/reception unit |
| 32a, 32b | Information control unit |
| 42 | Transmission/reception unit |
| 44 | Setting unit |
| 46 | Server control unit |
| 48 | Information storage unit |
| 50, 80 | Computer |
| 51, 81 | CPU |
| 53, 83 | Storage unit |
| 59, 89 | Recoding medium |
| 60 | Sensor information acquisition program |
| 90 | Information acquisition program |
| 63 | Sensor information acquisition process |
| 64 | Detection process |
| 65 | Transmission/reception process |
| 66 | Information control process |
| 67 | Sensor information storage area |
| 94 | Setting process |
| 95 | Server control process |
| 96 | Information storage area |
| V1, V2, V3, V4 | Vehicle |

**Claims**

**1.**   An information acquisition method for causing a computer to execute processing of:

in a case of receiving failure occurrence information that is information transmitted from a sensor information acquisition device that acquires sensor information regarding a vehicle and is information indicating occurrence of a failure in a specific vehicle, transmitting a request signal requesting transmission of related information related to the failure of the specific vehicle to the sensor information acquisition device different from the sensor information acquisition device that has transmitted the failure occurrence information; and

acquiring each piece of the related information transmitted from the sensor information acquisition device that has received the request signal.

2. The information acquisition method according to claim 1, wherein
the sensor information acquisition device includes an in-vehicle device mounted on a vehicle.

3. The information acquisition method according to claim 1 or 2, wherein
the sensor information acquisition device includes an on-road sensor device installed on a road where a vehicle travels.

4. The information acquisition method according to any one of claims 1 to 3, further comprising:

in transmitting the request signal to the sensor information acquisition device,
setting the sensor information acquisition device to which the request signal is to be transmitted according to at least one of position information of the sensor information acquisition device, time information of when the sensor information is acquired by the sensor information acquisition device, identification information of the vehicle, the sensor information acquired by the sensor information acquisition device, and weather information of a vicinity of the sensor information acquisition device; and
transmitting the request signal to the set sensor information acquisition device.

5. The information acquisition method according to claim 4, further comprising:

in setting the sensor information acquisition device to which the request signal is to be transmitted,
setting the sensor information acquisition device to which the request signal is to be transmitted using a logical expression including at least one of the position information of the sensor information acquisition device, the time information of when the sensor information is acquired by the sensor information acquisition device, the identification information of the vehicle, the sensor information acquired by the sensor information acquisition device, and the weather information of a vicinity of the sensor information acquisition device.

6. The information acquisition method according to claim 5, wherein
the logical expression is generated on a basis of a predetermined condition.

7. The information acquisition method according to claim 5 or 6, further comprising:

in storing each piece of the related information transmitted from the sensor information acquisition device that has received the request signal in a storage unit,
setting the logical expression as a search key, and storing the related information in association with the search key in the storage unit.

8. The information acquisition method according to any one of claims 1 to 7, further comprising:

in transmitting the request signal to the sensor information acquisition device,
transmitting the request signal to the set sensor information acquisition device at a higher frequency than a predetermined frequency.

9. The information acquisition method according to any one of claims 1 to 8, wherein
the failure occurrence information includes at least one of position information of when the failure has occurred in the specific vehicle, time information of when the failure has occurred in the specific vehicle, identification information of the specific vehicle, and weather information of when the failure has occurred in the specific vehicle.

10. The information acquisition method according to claim 9, further comprising:
setting the sensor information acquisition device to which the request signal is to be transmitted on a basis of the time information of when the failure has occurred, the time information being included in the failure occurrence information.

11. An information acquisition device comprising:

a transmission unit configured to, in a case of receiving failure occurrence information that is information transmitted from a sensor information acquisition device that acquires sensor information regarding a vehicle and is information indicating occurrence of a failure in a specific vehicle, transmit a request signal requesting transmission of related information related to the failure of the specific vehicle to the sensor information acquisition device different from the sensor information acquisition device that has transmitted the failure occurrence information; and
a reception unit configured to acquire each piece of the related information transmitted from the sensor information acquisition device that has received the request signal.

12. The information acquisition device according to claim 11, wherein
the sensor information acquisition device includes an in-vehicle device mounted on a vehicle.

13. The information acquisition device according to claim 11 or 12, wherein
the sensor information acquisition device includes an on-road sensor device installed on a road where a vehicle travels.

14. The information acquisition device according to any one of claims 11 to 13, further comprising:

a setting unit configured to set,
in transmitting the request signal to the sensor information acquisition device,
the sensor information acquisition device to which the request signal is to be transmitted according to at least one of position information of the sensor information acquisition device, time information of when the sensor information is acquired by the sensor information acquisition device, identification information of the vehicle, the sensor information acquired by the sensor information acquisition device, and weather information of a vicinity of the sensor information acquisition device, wherein
the transmission unit transmits the request signal to the sensor information acquisition device set by the setting unit.

15. An in-vehicle device comprising:

a reception unit configured to receive information transmitted from the information acquisition device according to any one of claims 11 to 14; and
an output unit configured to output the related information to the information acquisition device in a case where the information received by the reception unit is the request signal.

16. An on-road sensor device comprising:

a reception unit configured to receive information transmitted from the information acquisition device according to any one of claims 11 to 14; and
an output unit configured to output the related information to the information acquisition device in a case where the information received by the reception unit is the request signal.

17. An information acquisition system comprising: a plurality of sensor information acquisition devices that acquires sensor information regarding a vehicle; and an information acquisition device that acquires information transmitted from the sensor information acquisition devices, wherein,

in a case where a failure has occurred in a specific vehicle, the sensor information acquisition device transmits failure occurrence information indicating the occurrence of the failure in the specific vehicle to the information acquisition device, and
in a case of receiving the failure occurrence information, the information acquisition device transmits a request signal requesting transmission of related information related to the failure of the specific vehicle to the sensor information acquisition device different from the sensor information acquisition device that has transmitted the failure occurrence information, and acquires each piece of the related information transmitted from the sensor information acquisition device that has received the request signal.

**18.** The information acquisition system according to claim 17, wherein
the sensor information acquisition device includes an in-vehicle device mounted on a vehicle.

**19.** The information acquisition system according to claim 17 or 18, wherein
the sensor information acquisition device includes an on-road sensor device installed on a road where a vehicle travels.

**20.** The information acquisition system according to claim 18 or 19, wherein,

in transmitting the request signal to the sensor information acquisition device, the information acquisition device sets the sensor information acquisition device to which the request signal is to be transmitted according to at least one of position information of the sensor information acquisition device, time information of when the sensor information is acquired by the sensor information acquisition device, identification information of the vehicle, the sensor information acquired by the sensor information acquisition device, and weather information of a vicinity of the sensor information acquisition device; and
transmits the request signal to the set sensor information acquisition device.

# FIG. 1

# FIG. 2

# FIG. 3

TO SERVER 14

# FIG. 4

| ID | POSITION INFORMATION | TIME INFORMATION | VEHICLE IDENTIFICATION INFORMATION | SENSOR IDENTIFICATION INFORMATION | SENSOR INFORMATION | WEATHER INFORMATION |
|---|---|---|---|---|---|---|
| 000001 | vp1 | vt1 | vcd1 | vsd1 | vs1 | va1 |
| ... | ... | ... | ... | ... | ... | ... |

# FIG. 5

TO SERVER 14

FIG. 6

| ID | POSITION INFORMATION | TIME INFORMATION | VEHICLE IDENTIFICATION INFORMATION | SENSOR IDENTIFICATION INFORMATION | SENSOR INFORMATION | WEATHER INFORMATION |
|---|---|---|---|---|---|---|
| 000001 | rp1 | rt1 | rad1 | rsd1 | rs1 | ra1 |
| ... | ... | ... | ... | ... | ... | ... |

# FIG. 7

TO IN-VEHICLE DEVICE 12a AND
ON-ROAD SENSOR DEVICE 12b

FIG. 8

| ID | SEARCH KEY | RELATED INFORMATION | | | | | |
|---|---|---|---|---|---|---|---|
| | | TIME INFORMATION | ... | SENSOR IDENTIFICATION INFORMATION | SENSOR INFORMATION | WEATHER INFORMATION |
| 000001 | [Ax∧Bx, Ey] | AA1 | ... | BB1 | CC1 | DD1 |
| ... | ... | ... | ... | ... | ... | ... |

# FIG. 9

50

59

51

**CPU**

54

**INPUT/OUTPUT DEVICE**

55

**R/W UNIT**

56

**NETWORK I/F**

57

53

**STORAGE UNIT**

**SENSOR INFORMATION ACQUISITION PROGRAM** — 60

**SENSOR INFORMATION ACQUISITION PROCESS** — 63

**DETECTION PROCESS** — 64

**TRANSMISSION/RECEPTION PROCESS** — 65

**INFORMATION CONTROL PROCESS** — 66

**SENSOR INFORMATION STORAGE AREA** — 67

52

**MEMORY**

# FIG. 10

# FIG. 11

```
        ┌─────────┐
        │  START  │
        └────┬────┘
             ↓
┌──────────────────────────────┐
│  ACQUIRE SENSOR INFORMATION   │ ～ S100
└──────────────┬───────────────┘
               ↓
         ╱──────────╲  ～ S102
   NO   ╱            ╲
 ←─────┤ HAS FAILURE  ├
       ╲  OCCURRED?  ╱
  │     ╲──────────╱
  │          │ YES
  │          ↓
  │  ┌──────────────────────────┐
  │  │ GENERATE FAILURE OCCURRENCE│ ～ S104
  │  │       INFORMATION         │
  │  └────────────┬─────────────┘
  │               ↓
  │  ┌──────────────────────────┐
  │  │ TRANSMIT FAILURE OCCURRENCE│ ～ S106
  │  │       INFORMATION         │
  │  └────────────┬─────────────┘
  │               │
  └───────────────┤
                  ↓
            ┌─────────┐
            │   END   │
            └─────────┘
```

# FIG. 12

START

ACQUIRE FAILURE OCCURRENCE
INFORMATION ~ S200

SET LOGICAL EXPRESSION ~ S202

SET IN-VEHICLE DEVICE OR ON-ROAD
SENSOR DEVICE ACCORDING TO LOGICAL
EXPRESSION ~ S204

TRANSMIT REQUEST SIGNAL ~ S206

END

# FIG. 13

```
        ┌─────────────┐
        │    START    │
        └──────┬──────┘
               │
               ▼
┌────────────────────────────────┐
│     ACQUIRE REQUEST SIGNAL      │ ～ S300
└────────────────┬───────────────┘
                 │
                 ▼
┌────────────────────────────────┐
│     READ RELATED INFORMATION    │ ～ S302
└────────────────┬───────────────┘
                 │
                 ▼
┌────────────────────────────────┐
│   TRANSMIT RELATED INFORMATION  │ ～ S304
└────────────────┬───────────────┘
                 │
                 ▼
        ┌─────────────┐
        │     END     │
        └─────────────┘
```

# FIG. 14

```
        ┌─────────────┐
        │    START    │
        └─────────────┘
               │
               ▼
┌──────────────────────────────────┐
│   ACQUIRE RELATED INFORMATION     │ ⌐ S400
└──────────────────────────────────┘
               │
               ▼
┌──────────────────────────────────┐
│    STORE RELATED INFORMATION      │ ⌐ S402
└──────────────────────────────────┘
               │
               ▼
        ┌─────────────┐
        │     END     │
        └─────────────┘
```

# FIG. 15

| IN-VEHICLE DEVICE (SPECIFIC VEHICLE) 12a | IN-VEHICLE DEVICE (ANOTHER VEHICLE) AND ON-ROAD SENSOR DEVICE 12a, 12b | SERVER 14 |
|---|---|---|

TRANSMIT FAILURE OCCURRENCE INFORMATION — S10

S12 — RECEIVE FAILURE OCCURRENCE INFORMATION

S14 — SET FIRST LOGICAL EXPRESSION

S16 — TRANSMIT REQUEST SIGNAL

TRANSMIT RELATED INFORMATION — S18

S20 — STORE RELATED INFORMATION

S22 — SET SECOND LOGICAL EXPRESSION

S24 — TRANSMIT REQUEST SIGNAL

S26 — TRANSMIT RELATED INFORMATION

S28 — STORE RELATED INFORMATION

S30 — SET THIRD LOCAL EXPRESSION

S32 — TRANSMIT REQUEST SIGNAL

S34 — TRANSMIT RELATED INFORMATION

S36 — STORE RELATED INFORMATION

## INTERNATIONAL SEARCH REPORT

International application No.

PCT/JP2017/045114

**A. CLASSIFICATION OF SUBJECT MATTER**
Int. Cl. G08G1/09(2006.01)i

According to International Patent Classification (IPC) or to both national classification and IPC

**B. FIELDS SEARCHED**

Minimum documentation searched (classification system followed by classification symbols)
Int. Cl. G08G1/09

Documentation searched other than minimum documentation to the extent that such documents are included in the fields searched

| | |
|---|---|
| Published examined utility model applications of Japan | 1922-1996 |
| Published unexamined utility model applications of Japan | 1971-2018 |
| Registered utility model specifications of Japan | 1996-2018 |
| Published registered utility model applications of Japan | 1994-2018 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>A | JP 2008-217218 A (DENSO CORP.) 18 September 2008, paragraphs [0002]-[0005], [0012]-[0033], fig. 1-6, (Family: none) | 1-6, 9, 11-20<br>7-8, 10 |
| X<br><br>A | JP 2012-198599 A (YAZAKI CORP.) 18 October 2012, paragraphs [0002]-[0005], [0017]-[0034], fig. 1-4, 7, (Family: none) | 1-3, 9, 11-13,<br>15-19<br>4-8, 10, 14, 20 |

☐ Further documents are listed in the continuation of Box C.      ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 11.01.2018 | 23.01.2018 |

| Name and mailing address of the ISA/<br>Japan Patent Office<br>3-4-3, Kasumigaseki, Chiyoda-ku,<br>Tokyo 100-8915, Japan | Authorized officer<br><br><br>Telephone No. |
|---|---|

Form PCT/ISA/210 (second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010126130 A
- JP 2002037075 A
- WO 2016166940 A